Europäisches Patentamt

European Patent Office

Office européen des brevets

(11) Publication number: **0 083 213**

**A2**

# EUROPEAN PATENT APPLICATION

(21) Application number: **82306897.8**

(22) Date of filing: **23.12.82**

(51) Int. Cl.³: **G 06 K 9/38**

(30) Priority: **28.12.81 US 335012**

(43) Date of publication of application:
**06.07.83 Bulletin 83/27**

(84) Designated Contracting States:
**DE GB**

(71) Applicant: **GENERAL ELECTRIC COMPANY**
**1 River Road**
**Schenectady New York 12305(US)**

(72) Inventor: **Morris, Edwin Earl**
**45 Bristol Road**
**Clinton New York 13323(US)**

(72) Inventor: **Hartless, Mac Lamar**
**RR 2 Box 335**
**Sauquoit New York 13456(US)**

(74) Representative: **Hughes, Brian P. et al,**
**Graham Watt & Co. Riverhead**
**Sevenoaks, Kent TN13 2BN(GB)**

(54) Digital background normalizer using two dimensional integration techniques.

(57) A digital background normalizer system for detecting a point signal or pixel value under test in a background area which is scanned to provide video signal that are converted into digital form. In order to accumulate by digital integration techniques, the total accumulated signal over a background window is squared by multiplier (20) prior to integrating (22) the volume under a curve which is bounded by the background window area, thereby accumulating the pixels in the complete background window area. Separately, the squared video signal is integrated (24) over a selected smaller central window around the pixel value under test. The accumulated values of the central window are subtracted (28) from the accumulated values of the complete background window to obtain a net accumulated signal value. A mean squared value of the net background accumulated signal (34) is obtained by dividing it by the number of pixels located over such net background window. Next, a root means square (RMS) noise value (38) in the background of the pixel under test is generated from the mean squared value. The RMS value provides the threshold value which is compared with the actual pixel signal under test for detecting if the pixel signal is above the threshold value. The threshold value can thus be continuously changed in accordance with the level of detected background noise.

FIG. 1

- 1 -

DIGITAL BACKGROUND NORMALIZER USING TWO

DIMENSIONAL INTEGRATION TECHNIQUES

BACKGROUND OF THE INVENTION

1. Field of the Invention

The present invention relates to threshold detection systems, and more particularly to systems for detecting point signals over a background area.

2. Description Of The Prior Art

In the detection of point signals or targets in a background area or scene which is scanned for such point signal or target, there is a common problem involved, whether the system involves sonar, audio, radar, infrared or any video detection system. In each of these systems, it is required to select the proper threshold which permits accurate detection of the point signal or target. In order to detect long range, weak signals or, for example, targets, the threshold must be set low. However, if the threshold is set low, background clutter will be detected, thus overloading the processor with too much data. What is desirable is a threshold that is low, when the background is clear such as a blue sky, and is raised in the part of the field-of-regard containing clutter.

In one known target detection system a background normalizer uses charge coupled devices (CCD) which adds all the "pixel" values of a background normalizer window by

- 2 -

parallel processing, and employs a mask having a hole in it for measuring the clutter around the desired signals so that the threshold level can be determined. In such a system, however, the window size is fixed by masking and cannot be varied. Also, since such a system is analog, the hardware required is cumbersome.

## OBJECTS OF THE INVENTION

Therefore, it is an object of the present invention to provide a signal detection system having a variable, adjustable threshold depending upon how much clutter is present around the point signal being detected.

It is another object to provide a digital background normalizer for continuously changing the threshold in accordance with background noise when detecting point signals.

These and other objects will be pointed out hereinafter.

## SUMMARY OF THE INVENTION

In accordance with the present invention there is provided a system and a method for detecting a point signal or pixel value under test in a background area, which includes scanning a background area in the vicinity of a pixel value, receiving signals representing the pixel value under test, and converting such signals into digital form. An estimate of the root mean squared (RMS) voltage in the vicinity of the pixel value under test is provided by squaring such signal to obtain a square signal and then integrating the volume under a curve which is bounded by a selected complete background window area around the pixel value under test, thereby accumulating the pixels in the complete background window area. Separately, the squared video signal is integrated over a central window around the pixel value under test, thereby accumulating the pixels in such central window. The accumulated values of the central window are subtracted from the accumulated values of the complete background window to obtain a net accumulated signal value for a net background window. A mean squared value of the net background accumulated signal is obtained by dividing it by the number of pixels located over such net background window. Next, a root mean square (RMS) value is determined by taking the square root of such mean squared value, thereby representing the noise value in the background of the pixel under test. The RMS value provides the threshold value. The actual pixel signal under test is compared with the RMS related threshold value for detecting if the pixel signal is above the threshold value. In addition, a multiplier scale factor is applied to the RMS value of the signal to adjust the noise related signal level, and the adjusted RMS value is compared with the actual pixel signal under test to thereby detect a signal.

It is to be understood that, as used herein, the term "pixel" is defined as the minimum discernable resolution area. It is also to be understood that, as used herein, the term "root mean square (RMS)" is defined as the square root of the mean squared values of the pixel signals as described herein. It is also to be understood that, as used herein, the term "mean squared value" is defined as the pixel signal value derived by dividing the accumulated squared values of pixel signals by the number of pixels contained in the accumulated area.

## BRIEF DESCRIPTION OF THE DRAWINGS

Figure 1 is a functional block diagram of the background normalizer system for detecting point signals over a background area using the digital background normalizer of the present invention;

Figure 2 shows a window configuration that includes a complete background window that is 9X9 pixels in area with a central 3X3 pixel window area that is excluded from the average;

Figure 3 shows the background window with its total integrated signal over the window area consisting of a volume bounded by the window and the squared signal;

Figure 4 illustrates the window width as the area bounded by the squared function and the parallel window lines; and

Figure 5 is a circuit block diagram of a preferred digital background normalizer illustrative of the present invention.

## DESCRIPTION OF THE PREFERRED EMBODIMENT

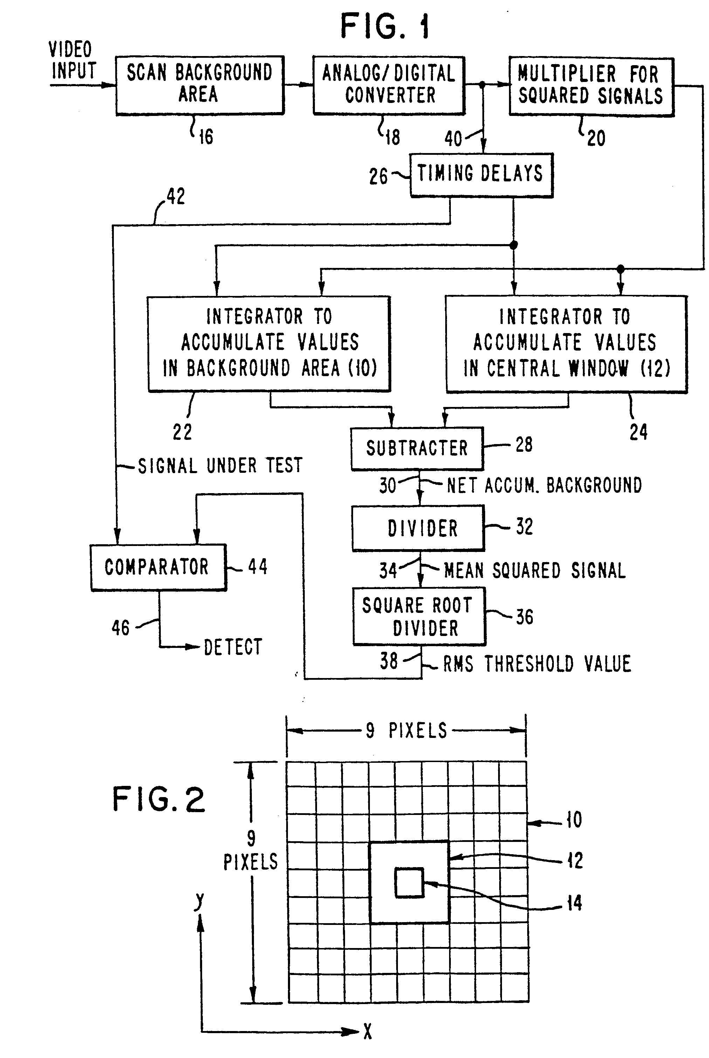

Referring to Figure 1 there is shown a functional block diagram of the digital background normalizer system for detecting a point signal or pixel value under test in a background area. The system will be described with reference to a specific implementation shown in Figure 2 of a background window configuration having a 9X9 pixel background area 10 and a central window 12 comprising a 3X3 pixel area within which a pixel value 14 under test is located. The window configuration shifts through a field of regard in this example that is 64 pixels per line (i.e. the horizontal (x) direction) and an arbitrary number of pixels in the vertical (y) direction. The general approach of the present invention is to sum all the squared pixel values of background area 10 by a two-dimensional integration process and exclude the pixel values in central window 12 in the immediate vicinity of pixel 14 under test by a similar integration process. The difference between the integrals for the two areas 10 and 12 is then divided by the number of pixels over the net background window or area (i.e. the complete background window minus the central window) to generate the mean squared signal. The RMS value is obtained by taking the square root of the mean squared signal which controls the threshold value for the pixel under test. This RMS threshold value is compared with the signal value of pixel value 14 under test and, if such signal exceeds the RMS related threshold value, a detection is determined.

Referring again to Figure 1, the background area is scanned at 16 in the vicinity of the pixel value under test and the video signals are converted by an analog to digital converter 18 into digital form. In order to accumulate by integration techniques, to be described below, the total accumulated signal over background window 10 and central window 12, the integration techniques require taking the squared value of the signals in each pixel area and then integrating the signal over the area of the windows by taking the volume bounded by the window and the squared signal. To accomplish this summation of the pixel values, a multiplier 20 squares the digital signals from A/D converter 18 and provides the squared signals to both a digital integrator 22 which accumulates the values in background window area 10, and a digital integrator 24 which accumulates the values in central window 12. A timing delay circuit 26 comprising conventional shift registers, not shown, is used to set the window sizes and, thus, the particular pixel signals in the area that are accumulated in each of the integrators 22 and 24. Thus, timing delay circuit 26 is connected to integrator 22 to cause integration of the signals in the volume under the curve which is bounded by window area 10, while such timing delay circuit 26 will set integrator 24 to include the 3X3 area 12 in the immediate vicinity of pixel 14 under test. The difference in the outputs in these areas is determined by a subtractor 28 which provides the accumulated values for the 9X9 background window area 10 minus the 3X3 central pixel area 12. The accumulated signal of the net background window area is provided on an output line 30 of subtractor 28.

The net background accumulated signal on line 30 is applied to a divider 32 where it is divided by the number of pixels contained in the net background window, in this case 81-9=72 pixels, to thereby generate a mean squared signal on line 34. A square root divider 36 converts the mean squared signal on line 34 to the root mean square (RMS) value representing the noise threshold value of the background, which is provided on output line 38. The actual pixel signal under test can be taken from output line 40 of A/D converter 18 by locating such pixel signal using timing delay circuit 26. Such pixel signal under test is then provided on line 42 to a comparator 44 where it is compared with the RMS threshold value on line 38. If the signal under test exceeds the threshold value, a detection is indicated on output line 46.

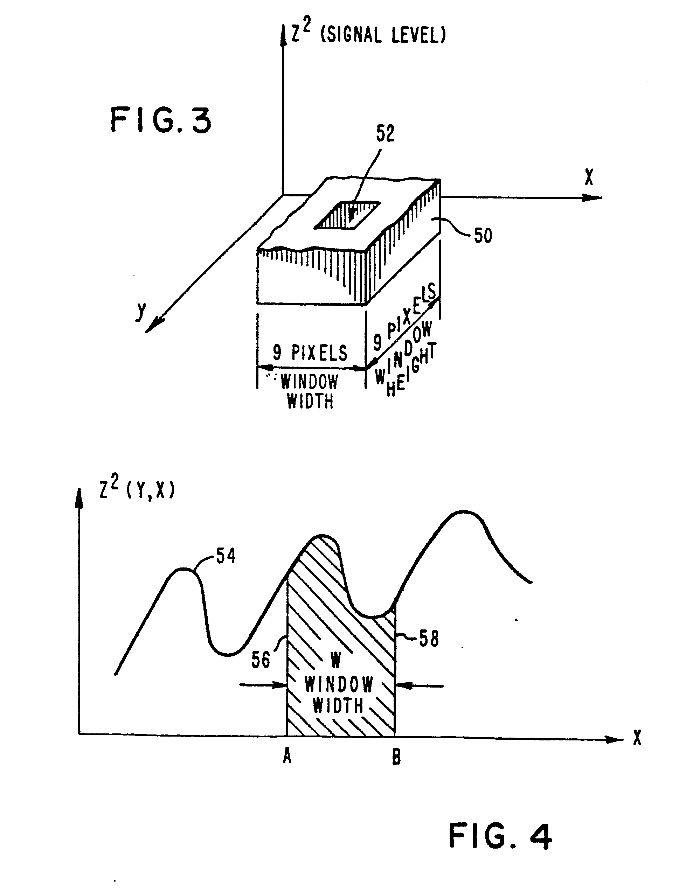

Figures 3 and 4 illustrate the mathematical operations involved in generating the mean squared signal for the background area. As explained above with respect to the functional block diagram, the averaged mean squared signal of the background window shown in Figure 2 is determined by integrating the squared signal over the x, y area of the window and then dividing by the number of pixels, for example, $(81 - 9) = 72$. The total integrated signal indicated by numeral 50 over the area of the window may be thought of as the volume bounded by the window and the squared signal. A hole 52 represents the 3X3 central window which is subtracted from the overall background. This function may be expressed in a continuous form as shown in equation (1) below.

$$(1) \quad \overline{z^2}(X,Y) = $$

$$\frac{1}{(\text{Window Area} - \text{Hole Area})} \left[ \int_{(x - \frac{\text{Window Width}}{2})}^{(x + \frac{(\text{Window Width})}{2})} \int_{(y - \frac{\text{Window Height}}{2})}^{(y + \frac{(\text{Window Height})}{2})} z^2(x,y) \right.$$

$$\left. - \int_{(x - \frac{\text{Hole Width}}{2})}^{(x + \frac{\text{Hole Width}}{2})} \int_{(y - \frac{\text{Hole Height}}{2})}^{(y + \frac{\text{Hole Height}}{2})} z^2(x,y) \right]$$

- 10 -

Each of the two double integrals can be treated independently. The first integral represents volume 50 bounded by the outside dimensions of the window. The second integral represents the volume bounded by hole 52 and this part is subtracted from the larger integral to generate the volume shown in Figure. 3.

Next there will be considered the implementation of the double integral. This integral can be considered as two sequential single integrals. By holding y constant and looking at the first double integral in Equation 1, it may be written as follows:

$$(2) \qquad \int_{x - \frac{Window\ Width}{2}}^{x + \frac{Window\ Width}{2}} Z^2\ (Y,x)$$

This integral is represented in Figure 4 as an area bounded by a curve 54 of the function $Z^2$ (y, x) and parallel lines 56 and 58 illustrating the window width. This area can be calculated in two ways. The obvious way is to integrate the $Z^2$ (y, x) from x = 0 to x = A and then integrate the function from x = 0 to x = B and subtract the two functions. However, this approach is not very practical since $Z^2$ (y, x) is always positive and digital integrators would soon overload. A preferred approach is to shift the function $Z^2$ (y, x) in the x direction by an amount of the window width, subtract the shifted and unshifted signals, and then integrate the differences. This reversed process is allowed since integration is a linear process. By using the second approach, the integrator capacity only has to be as big as the maximum area of the signal illustrated in Figure 4. This reversed process is written as follows:

$$(3) \quad A(Y, x) = \int_{0}^{X} z^2 \left[ Y, s \right] - z^2 \left[ Y, (s - W) \right] \, ds$$

where s is a dummy variable and A (Y, x) is the area under the curve. A (Y, x) can then be integrated in the y direction in a similar way to give the volume under the window.

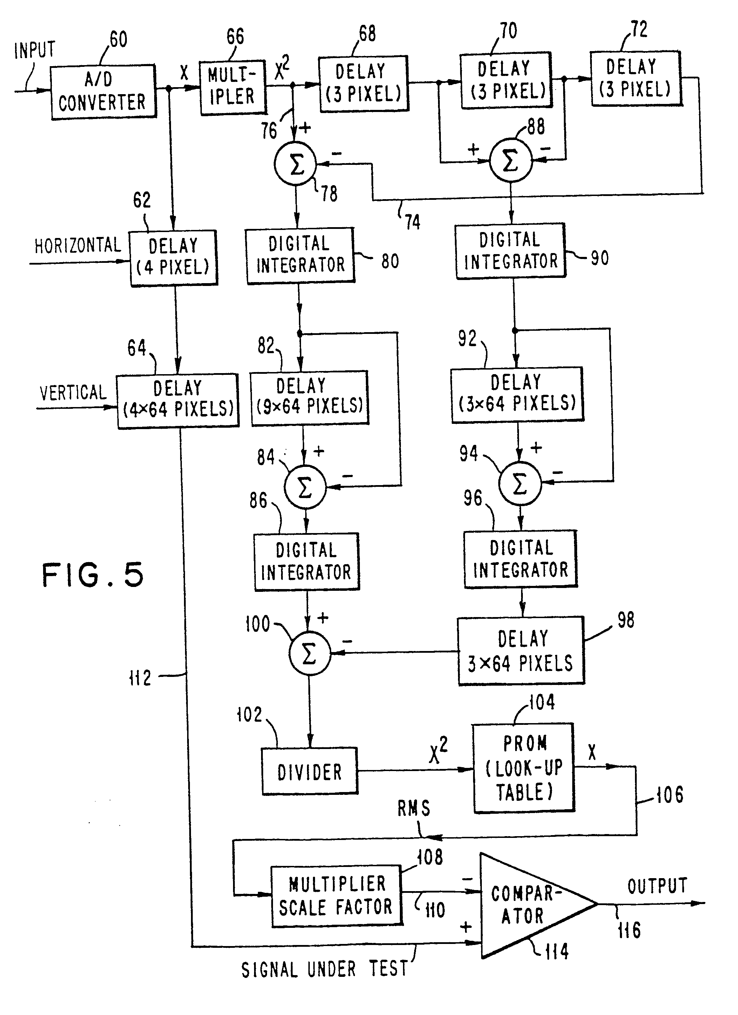

Referring to Figure 5, there is shown a detailed block diagram of one embodiment of the digital background normalizer where the pixel dimensions of the background window and the central window are shown and described with reference to Figures 2, 3 and 4. It is noted that the specific circuit elements of Figure 5 provide the same general functions as the elements shown in the fuctional block diagram of Figure 1. The input signal is converted from an analog to a digital format with an A/D converter 60. The number of bits of resolution is a system dependent parameter and for this system is selected as 8 bits (256 levels). The signal then follows two paths. The first path is through delay units 62 and 64 in order to compensate for the processing delay of the other path. Delay unit 62 can, for example, be a shift register that compensates for the processing delay in the horizontal (x) direction while delay unit 64 compensates for the processing delay in the vertical (y) direction of four (4) horizontal lines with sixty-four (64) pixels in each line. The second signal path first goes through a multiplier 66 comprising a PROM which squares the input number in the form of a digital signal. The squared signal then separates into two paths. The first path integrates the signal bounded by background window 10, while the second path integrates the signal bounded by the central window or hole 12.

By PROM is meant a programmable read only memory.

The integral of the signal bounded by background window 10 is generated by shifting the input signal nine pixels in the x direction using shift register delay units 68, 70 and 72 each of which provides for a three pixel delay. The shifted signals on a line 74 and the unshifted signals on a line 76 are subtracted in a summing device 78 and the results integrated using an accumulator or a digital integrator 80. If integrator 80 is initially reset to zero, its output will be the area bounded by the video signal and the window width. This represents the implementation of Equation 3, and is illustrated in Figure 4. If this result is then shifted by nine pixels in the y direction, using delay unit 82, the double integral (i.e., volume) can be evaluated using a summing device 84 and a digital integrator 86. The output of integrator 86 represents the summation of the eighty-one squared pixel values bounded by window 10.

In a similar manner, the nine pixel values bounded by the hole or central window 12 are squared and summed using delay unit 70, a summing device 88, a digital integrator 90, a 3x64 pixel delay unit 92, a summing device 94, a digital integrator 96, and a 3x64 pixel delay unit 98. It should be noted that integrators 86 and 96 should have an independent latch comprised of an adder and one register for each of the 64 pixels in the line or scanned horizontal (x) direction . By subtracting these two summations in a summing device 100, the total net summation of the squared signal values bounded by background window 10 shown in Figure 2 is obtained. This value is divided in a divider 102 by seventy-two, representing the net number of pixels (81-9) in the net background area, to obtain the mean squared value. A PROM 104 provides the square root of this value to yield the RMS value on a line 106, and multiplying this by a scale factor in a multiplier 108 yields the detector threshold value. It is noted that on line a 110, these three operations can be easily accomplished using a PROM. The original delayed signal on a line 112 from delay unit 64 is then compared to the detector threshold value in a comparator 114. If the original delayed signal exceeds the threshold, a detection is declared or generated on a line 116.

It should be noted that by changing the length of the pixel delay of delay units 68, 70 and 72 and delay unit 82, the size of the scanned background window or area can be varied. Similarly, by changing the length of the pixel delay of delay units 70 and 92, the size of the smaller central window can be varied. The varying of the size of the background window and the smaller central window of course results varying the signal values accumulated by respective integrators 86 and 96.

CLAIMS

1. A system for detecting a point signal or pizel value under test within a scanned background window, comprising:

means for converting signals within the background window into digital signals;

means for squaring the digital signals to obtain squared values;

first integrator means for accumulating signal values over a volume bounded by the background window and its squared signal values;

second integrator means for accumulating signal values over a volume bounded by a smaller central window and its squared signal values, the smaller central window being contained within the background window and located around said pixel value under test;

means for subtracting the accumulated values of the central window from the accumulated values of the background window to obtain a net accumulated background signal for a net background window;

means for dividing the net accumulated background signal by the number of pixel signals contained in the net background window to obtain a mean squared signal;

means for deriving the square root of the mean squared signal, whereby to provide a RMS noise threshold value in the background of the pixel value under test; and

means for comparing the actual pixel value under test with the RMS threshold value for detecting if the pixel value is above the threshold value.

2. A system as recited in claim 1, further comprising means for applying a multiplier scale factor to the RMS noise threshold value to adjust it to a desired background noise level.

3. A system as recited in claim 1, further comprised of first delay means for varying the area of the smaller central window and the signal values accumulated by said second integrator means.

4. A system as recited in claim 3 further comprising second delay means for varying the size of the background window and the signal values accumulated by said first integrator means.

0083213

## FIG. 1

## FIG. 2

FIG. 3

$Z^2$ (SIGNAL LEVEL)

X

52

50

9 PIXELS
WINDOW WIDTH

9 PIXELS
WINDOW HEIGHT

y

$Z^2(Y,X)$

54

56

58

W
WINDOW
WIDTH

A          B          X

FIG. 4

FIG. 5